# EUROPEAN PATENT APPLICATION

(11) **EP 3 677 662 A1**
(43) Date of publication of application: **08.07.2020**
(21) Application number: 18852393.0
(22) Date of filing: 30.08.2018
(51) Int. Cl.: C10M 119/20, C10M 169/02, C10M 101/02, C10M 101/04, C10M 105/18, C10M 105/32, C10N 20/00, C10N 20/06, C10N 30/00, C10N 40/02, C10N 50/10, F16C 19/06, F16C 33/66

(54) **GREASE COMPOSITION, METHOD FOR PRODUCING SAME, AND ROLLING DEVICE**

(30) Priority: 31.08.2017 JP 2017167938
(71) Applicant: Hattori Shoten Co., Ltd, Nagoya-shi, Aichi 460-0002 (JP); NTN Corporation, Osaka-shi, Osaka 550-0003 (JP)
(72) Inventor: NAKAYAMA, Yoshikazu, Kyoto-shi Kyoto 613-0916 (JP); INOUE, Hideaki, Kyoto-shi Kyoto 613-0916 (JP); OBATA, Tomohiko, Kuwana-shi Mie 511-0867 (JP); FUJIWARA, Hiroki, Kuwana-shi Mie 511-0867 (JP); YOSHINO, Masato, Kuwana-shi Mie 511-0867 (JP)
(74) Representative: White, Duncan Rohan
(86) International application number: PCT/JP2018/032049
(87) International publication number: WO 2019/044942

(57) **Abstract**

Provided are a grease composition that has a high biodegradability without causing adverse effects such as rust generation as well as achieving lowered torque and high durability when used for sealing in rolling bearings, and a method of producing the same. Furthermore, a rolling device in which the grease composition is used for lubrication is provided. The rolling bearing 1 is formed by sealing the grease composition 7 in peripheries of rolling elements 4. The grease composition 7 contains a base oil and a thickener. The thickener is a predetermined hydrophobic cellulose fiber and contained in an amount of 0.1 to 15% by mass with respect to the total mass of the base oil and the thickener.

## Description

### TECHNICAL FIELD

The present invention relates to a grease composition in which a predetermined cellulose nanofiber is utilized as a thickener, and a method of producing the same. The present invention relates also to a rolling device prepared by sealing with the grease composition and so on.

### BACKGROUND ART

A rolling device is formed of an interior member, an exterior member, and a plurality of rolling elements disposed to be rollable between these members. Such rolling devices include rolling bearings, constant velocity joints, linear guide devices, ball screws and so on, for example. Many rolling bearings have been used in various industrial machines conventionally as machine parts. After a predetermined period of use, the entire devices are often disposed of as industrial wastes without removal of rolling bearings. In most cases, the devices are disposed of in ways such as incinerating, disposing in ocean or underground, and leaving them in mountains.

Due to recent growing awareness of environmental problems, biodegradable structural materials have been utilized for developing rolling bearings and the like as eco-friendly products not harmful to global environment. For example, a rolling bearing has been proposed (see Patent Literature 1), in which an inner ring, an outer ring and rolling elements are made of steel and a seal and a holder are made of a biodegradable polyethylene terephthalate-butylene adipate copolymer. With the use of such biodegradable materials, it is possible to substantially reduce environmental loads at a time of disposing of, compared to the use of materials, such as engineering plastics and synthetic rubber derived from fossil resources, which are not degradable in natural environment.

In the rolling bearing of Patent Literature 1, it has been proposed to use a biodegradable grease in which biodegradable synthetic ester oil or vegetable oil is used as a base oil for a lubricant. The grease composition used for lubricating a rolling device such as the rolling bearing may suffer from leakage or scattering during use. For this problem, it is preferable to use the biodegradable grease not only during disposal but also during normal use from the viewpoint of environmental protection.

Conventionally, as a grease composition that exhibits biodegradability while securing heat resistance and durability, a grease composition containing a base oil and a thickener has been proposed (see Patent Literature 2), in which an ester oil or a vegetable oil is used as the base oil and at least one of chitosan and chitin is used as the thickener. Chitin can be isolated from shells of shellfishes, which are natural resource. Chitosan can be obtained by deacetylation of the chitin with use of a strong alkali.

Furthermore, a grease has been proposed, in which hydrophilic nanofibers such as cellulose, chitin and chitosan with a predetermined thickness are dispersed in a base oil. Hydrophilic cellulose nanofibers have hydroxy groups on surfaces of cellulose, and can be dispersed by forming hydrogen bonding with water molecules in water. When the hydrophilic cellulose nanofibers are extracted from water, the fibers aggregate with each other. For this problem, in Patent Literature 3, grease is prepared by blending the base oil with aqueous solution in which the hydrophilic cellulose nanofibers are dispersed, mechanically dispersing, and then dissipating water.

### PRIOR ART DOCUMENTS

### PATENT DOCUMENTS

Patent Literature 1: JP 3993377 B
Patent Literature 2: JP 2013-116991 A
Patent Literature 3: WO 2016/175258

### SUMMARY OF THE INVENTION

### PROBLEMS TO BE SOLVED BY THE INVENTION

The biodegradable grease in the rolling bearing of Patent Literature 1 does not exhibit high biodegradability varying depending on the thickener component, although the base oil component has a high biodegradability. In the grease composition of Patent Literature 2, chitosan or chitin derived from natural products is used as the thickener, requiring high cost although exhibiting superior biodegradability.

Patent Literature 2 does not describe an amount of the blended base oil to achieve a predetermined consistency. High amount of thickener develops torque in bearings and the like, as well as reducing the amount of the base oil, resulting in disadvantage in terms of lubrication lifetime.

In Patent Literature 3, as mentioned above, grease is prepared by dissipating water in a final step. However, the hydroxy groups of the hydrophilic cellulose nanofiber form the hydrogen bonding with water, making it difficult to completely dissipate the water. For this problem, rust may be generated in the case where the grease is used in rolling devices such as rolling bearings including steel parts. In addition, when contaminated with water, the grease may easily suffer from hydrogen embrittlement peeling.

The present invention has been made to address such problems and has an object to provide a grease composition that exhibits a high biodegradability and achieves lowered torque and high durability without causing adverse effects such as rust generation when used for sealing in rolling bearings or the like, and a method of producing the same. Furthermore, the present invention has an object to provide a rolling device in which this grease composition is utilized for lubrication.

### MEANS FOR SOLVING THE PROBLEM

A grease composition according to the present invention includes a base oil, and a thickener. The thickener is a hydrophobic cellulose fiber and is contained in an amount of 0.1 to 15% by mass with respect to a total mass of the base oil and the thickener. In particular, the hydrophobic cellulose fiber is used to prepare a sheet, and a contact angle between the sheet and water exceeds 90 degrees when the water is dropped on a surface of the sheet.

The hydrophobic cellulose fiber is a cellulose nanofiber with an average fiber diameter of 4 to 500 nm.

The grease composition has a mixing consistency of 200 to 430.

The base oil includes at least one selected from a vegetable oil and an ester oil. Furthermore, the base oil includes at least one selected from a paraffinic mineral oil and an ether oil.

A method of producing the grease composition according to the present invention includes blending the base oil with the hydrophobic cellulose fiber to prepare a suspension, and mechanically defiberizing an aggregate of the hydrophobic cellulose fibers in the suspension and greasening.

A rolling device according to the present invention includes two members coming into rolling contact with each other at a rolling contact part lubricated with the grease composition according to the present invention. Furthermore, the rolling device is a rolling bearing including an inner ring having an inner ring raceway surface in an outer periphery thereof, an outer ring having an outer ring raceway surface in an inner periphery thereof, and a plurality of rolling elements rolling between the inner ring raceway surface and the outer ring raceway surface.

### EFFECTS OF THE INVENTION

The grease composition of the present invention contains a base oil and a thickener, and the thickener is a hydrophobic cellulose fiber (cellulose nanofiber). The thickener is contained in an amount of 0.1 to 15% by mass with respect to the total mass of the base oil and the thickener, enabling the composition to exhibit such a high biodegradability as to be utilized as a lubricant with low environmental loads. Furthermore, it is possible to provide a semi-solid grease to be added in a small amount to exhibit a sufficient consistency (for example, 200 to 430), achieving a reduced amount of the thickener and a high amount of the base oil as well as lowered torque and a high durability when the composition is used to seal in the rolling bearing.

Moreover, such a hydrophobic cellulose fiber thickener can be combined with a highly biodegradable base oil such as a vegetable oil or an ester oil to further reduce the environmental loads. Moreover, with use of the ether oil having a high durability against high temperatures for the base oil, it is possible to improve the high durability against high temperatures while reducing environmental loads on surfaces of the thickener.

The method of producing the grease composition of the present invention utilizes the hydrophobic fiber and includes a step of dispersing and defiberizing the hydrophobic fibers in an oil, facilitating preparation of a homogeneous grease while preventing the cellulose fibers from aggregating each other in the oil without utilizing water dispersion. In addition, the method is free from residual water in the grease, suppressing adverse effects such as rust generation when the grease is utilized in the rolling device.

The rolling device includes two members coming into rolling contact with each other at a rolling contact part lubricated with the grease composition of the present invention, achieving an eco-friendly bearing with low environmental loads while maintaining low torque and high durability.

### BRIEF DESCRIPTION OF THE DRAWINGS

Fig. 1 is a cross-sectional view of an example of a rolling bearing, which is a rolling device of the present invention.
Fig. 2 is a graph illustrating a time-dependent change of torque.
Fig. 3 is a graph illustrating a relation between a shear rate and an apparent viscosity.

### MODE FOR CARRYING OUT THE INVENTION

A grease composition of the present invention contains a base oil and a thickener, and a hydrophobic cellulose fiber is used as the thickener. The content of hydrophobic cellulose fiber is 0.1 to 15% by mass in a base grease made of the base oil and the thickener, with respect to the total mass of the base grease.

The hydrophobic cellulose fiber used in the grease composition of the present invention is a fine cellulose fiber with a nano-sized fiber diameter (diameter). A plurality of cellulose molecules are aggregated together to form the fiber with nano-sized diameter. The cellulose molecules are linked to each other via hydrogen bonding. In the present invention, cellulose nanofiber (CNF) and cellulose nanocrystal (CNC) can be used as such a cellulose fiber.

The cellulose nanofiber (CNF) has an average fiber diameter of 4 to 500 nm for example, preferably 30 to 300 nm, more preferably 30 to 100 nm, and has an average fiber length of 1 µm or more, preferably 5 µm or more. Furthermore, an aspect ratio of the average fiber length to the average fiber diameter is preferably 10 or more. The cellulose nanocrystal (CNC) has an average fiber diameter of 4 to 100 nm for example, preferably 10 to 50 nm, and has an average fiber length of 100 to 500 nm. The fiber diameter and fiber length in the present invention can be measured with electron microscopes, atomic force microscopes and the like, which are conventionally used in the present field. The average fiber diameter and the average fiber length can be calculated as a number average fiber diameter and a number average fiber length, respectively, according to the measurement.

It is preferred to use the cellulose nanofiber (with the average fiber diameter of 4 to 500 nm, the average fiber length of 1 µm or more and the aspect ratio of 10 or more), in particular, since it exhibits a high thickening effect for the base oil and easily achieves a desired mixing consistency even with a small blending amount.

Materials (cellulose) of cellulose nanofiber may include a plant-derived cellulose obtained from conifer kraft pulp, broadleaf kraft pulp, Manila hemp pulp, sisal hemp pulp, bamboo pulp, esparto pulp, cotton pulp or the like; a highly polymerized regenerated cellulose (polynosic rayon) made of low acidic melt spinning fibers; a regenerated cellulose such as solvent spun rayon produced by using amine oxide organic solvent; a bacterially produced cellulose; an animal-derived cellulose formed by using an animal such as sea squirt; nanocellulose produced by electric field spinning; or the like.

There are physical and chemical methods used as a method of producing the cellulose nanofiber from the plant-derived cellulose. Both methods can be utilized in the present invention. The physical methods (fibrillating) may include a high pressure homogenizer method, a microfluidizer method, a ball mill crushing method, a grind mill crushing method or the like. The chemical methods may include a TEMPO oxidation method or the like.

Hydrophobic cellulose fiber used in the present invention is a material (modified pulp) with chemically modified surfaces of the above cellulose nanofiber or the like. Specifically, the material refers to a fiber, which is modified by at least one method selected from esterification and etherification of hydroxy groups of cellulose fiber for the purpose of hydrophobization. The "hydrophobic cellulose fiber" in the present invention refers to a fiber adapted in use to prepare a sheet, which achieves a contact angle exceeding 90 degrees between the sheet and water when the water is dropped on a surface of the sheet. More preferably, the contact angle is 100 degrees or more. Further preferably, the contact angle is 120 degrees or more.

In the case of having a contact angle of 90 degrees or less, the fiber refers to a hydrophilic cellulose fiber. The hydrophilic cellulose fiber may cause aggregation of the fibers dispersed in the oil due to the hydrogen bonding between cellulose fibers even after the fibers are dispersed in the oil by dissipating water with a combination of water dispersion and oil dispersion. Meanwhile, with the use of hydrophobic cellulose fiber, the grease composition of the present invention is prevented from causing the aggregation of fibers in the base oil while maintaining properties of grease.

The hydrophobic cellulose fiber used in the present invention may refer to a fiber with lignin or hemicellulose partially left. The hydrophobic cellulose fiber may have a cross-sectional shape with either one of anisotropic shape (flattened shape or the like) and isotropic shape (real circle, regular polygon or the like).

A highly biodegradable oil can be used as the base oil used in the grease composition of the present invention. For example, the base oil preferably has a biodegradation percentage of 60 or more. The biodegradability refers to an index for indicating biodegradability and a value that is measured according to OECD 301 guideline. The OECD 301 guideline is a guideline described in "chemical test guideline" of Organization for Economic Co-operation and Development (OECD).

Such a highly biodegradable base oil may include a plant oil or an ester oil, for example. Specific examples of the plant oil include canola oil, castor oil, corn oil, soybean oil, sunflower oil, palm oil, sesame oil, rice bran oil and the like.

The ester oils may include a diester oil obtained by reaction of a dibasic acid with a branched alcohol, an aromatic ester oil obtained by reaction of an aromatic tribasic acid with a branched alcohol, or a polyolester oil obtained by reaction of a multivalent alcohol with a monobasic acid (in particular, products with biodegradability percentage of 60 or more).

Specific examples of the diester oil include dioctyl adipate, diisobutyl adipate, dibutyl adipate, dioctyl azelate, dibutyl sebacate, dioctyl sebacate and the like. Specific examples of the aromatic ester oil include trioctyl trimellitate, tridecyl trimellitate, tetraoctyl pyromellitate and the like.

In the polyol ester oil, the monobasic acid to be reacted with the multivalent alcohol may be used solely or used as a mixture. The multivalent alcohols may include trimethylolpropane, pentaerythritol, dipentaerythritol, neopentyl glycol, 2-methyl-2-propyl-1,3-propanediol or the like. The monobasic acid may include a monovalent fatty acid with a carbon number of 4 to 18, such as valeric acid, caproic acid, caprylic acid, enanthic acid, pelargonic acid, capric acid, undecanoic acid, lauric acid, myristic acid, palmitic acid, tallow acid, stearic acid, caproleinic acid, undecylenic acid, linderic acid, tsuzuic acid, physeteric acid, myristoleic acid, palmitoleic acid, petroselinic acid, oleic acid, elaidic acid, asclepinic acid, vaccenic acid, sorbic acid, linoleic acid, linolenic acid, sabinic acid or ricinoleic acid. Specific examples of the polyolester oil include trimethylolpropane caprylate, trimethylolpropane pelargonate, pentaerythritol 2-ethyl hexanoate, pentaerythritol pelargonate and the like.

The base oil used in the grease composition of the present invention may include a paraffinic mineral oil or an ether oil other than the above oils. The mineral oils are categorized into paraffinic and naphthenic oils, depending on the difference in their molecular structures. The paraffinic oils have higher biodegradability than naphthenic oils, and therefore can be preferably utilized in the present invention.

The ether oil may include a polyphenylether oil, an alkyldiphenylether oil, a dialkyldiphenylether oil, an alkyltriphenylether oil, an alkyltetraphenylether oil, a dialkyldiphenylether oil or the like. These ether oils have superior stability against oxidation and excellent durability against high temperatures. Due to the high biodegradability in the thickener component, it is possible to improve the biodegradability for the whole of the grease even with use of these ether oils.

Kinematic viscosity of the base oil (or kinematic viscosity of the mixture oil in the case of the mixture oil) used in the grease composition of the present invention is preferably 10 to 200 mm²/s at 40°C. The kinematic viscosity is more preferably 20 to 150 mm²/s, further preferably 20 to 80 mm²/s.

The base oil is blended with the thickener (hydrophobic cellulose fiber) for preparation of the base grease. For example, the hydrophobic cellulose fiber can be greasened by adding a dispersion (gel dispersion or the like), which is prepared by dispersing the fibers in an arbitrary solvent, to the base oil; and dispersing the fiber homogeneously in the base oil while removing the solvent by heating, kneading. The dispersion solvent can be partially left unless causing particular adverse effects on the rolling device.

The grease may be prepared by defiberizing raw pulp or the like in the base oil. For example, the grease can be prepared by blending the base oil with the hydrophobic cellulose fiber to prepare a suspension, and then mechanically defiberizing the aggregate of the hydrophobic cellulose fibers in the suspension for the purpose of greasening. It is possible to use a mixer or the like for preparation of the suspension, and a grinding mill or the like for defiberizing the aggregate in the suspension. The use of hydrophobic cellulose fibers enables it to prevent the fibers from aggregating each other in the base oil, therefore facilitating the mechanical defiberization. In this method, water is not used as the dispersion solvent in the preparation processes for the greasening. Therefore, the grease is free from residual water, suppressing adverse effects such as rust generation and higher likelihood of causing hydrogen embrittlement peeling.

Well-known additives such as antioxidants, extreme pressure additives, oil agents, metal deactivator agents, antiwear additives and antirust surfactant agents can be added as other additives to the grease composition as required.

The content of the thickener in the base grease made of the base oil and the thickener is 0.1 to 15% by mass, preferably 1 to 10% by mass, more preferably 3 to 8% by mass. In the case of a content of the hydrophobic cellulose fiber acting as the thickener in a range less than 0.1% by mass, the effect of thickening is suppressed to cause difficulty in greasening. In the case of the content exceeding 15% by mass, the content of the base oil is relatively low, potentially causing difficulty in achieving desired effects.

The grease composition of the present invention exhibits a mixing consistency (JIS K 2220: 60 times mixing consistency) in a range of 200 to 430, preferably 350 to 430. Within this range (350 to 430), it is possible to suppress the leakage to the outside of the bearing while achieving lowered torque with the use of the hydrophobic cellulose fiber as the thickener.

With the use of the hydrophobic cellulose fiber as the thickener, it is possible to obtain a semi-solid grease with a sufficient consistency by the above-mentioned small amount of addition. Therefore, it is possible to increase a ratio of the base oil, and extend a lubrication lifetime. Moreover, cellulose is a naturally derived product and exhibits a high biodegradability, and thereby providing a bearing friendly to living environment with reduced environmental loads.

The grease composition of the present invention is used to lubricate the rolling device. The rolling device is a device including two members coming into rolling contact with each other. The rolling device is formed of an interior member, an exterior member, a plurality of rolling elements disposed to be rollable between the two members, and the like. Specific examples of the rolling device include a rolling bearing, a constant velocity joint, a linear guide device, a ball screw and the like.

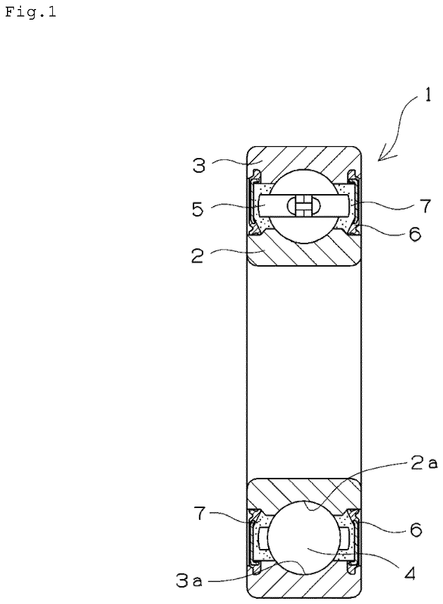

The rolling bearing referring to the rolling device of the present invention will be described with reference to Fig. 1. Fig. 1 is a cross-sectional view of a deeply grooved ball bearing. The rolling bearing 1 includes the inner ring 2 and the outer ring 3, which are concentrically disposed. The inner ring 2 has an inner ring rolling surface 2a in an outer periphery thereof. The outer ring 3 has an outer ring rolling surface 3a in an inner periphery thereof. A plurality of rolling elements 4 are disposed between the inner ring rolling surface 2a and the outer ring rolling surface 3a. The rolling elements 4 are held by a holder 5. The inner and outer rings have openings at both ends in their axial directions that are sealed with a sealing member 6. The grease composition 7 described above is introduced for sealing in at least peripheries of the rolling elements 4. The grease composition 7 lubricates parts of rolling contacts of the inner ring 2 and the outer ring 3 with the rolling elements 4.

In rolling bearing 1, the material that constitutes bearing members, such as the inner ring 2, the outer ring 3, the rolling element 4 and the holder 5, is not limited to a particular material, and can be selected arbitrarily from materials conventionally used as the bearing members. For example, the material may be steel materials such as a high carbon chromium bearing steel, a carburized steel, a stainless steel, a high speed steel, a cold rolled steel or the like. The sealing member 6 may be made solely of a metal or a rubber mold, or may be a composite of a rubber molding with a metal plate, a plastic plate or a ceramic plate. Among the above bearing members, the holder and the sealing member are made of well-known biodegradable material (such as a resin) in particular, achieving the rolling bearing with substantially reduced loads on environment, in combination with the grease composition described above.

Although Fig. 1 illustrates a ball bearing as the bearing, a cylindrical roller bearing other than those described above, a tapered roller bearing, a self-aligning roller bearing, a needle roller bearing, a thrust cylindrical roller bearing, a thrust tapered roller bearing, a thrust needle roller bearing, a thrust self-aligning roller bearing, and the like may be utilized as the rolling bearing of the present invention.

### Example

The hydrophobic cellulose nanofiber (modified pulp: "chemically modified CNF" in Tables 1 and 2) used as the thickener of an example will be described. This modified pulp is obtained by chemical modification (esterification and/or etherification) of hydroxy groups of the cellulose fiber. Table 1 lists the contact angle with water. For a comparison, Table 1 also lists the contact angle with water for the cellulose nanofiber ("unprocessed CNF" in Table 1) without modification of the cellulose fiber. The contact angle was measured as a contact angle between the sheet and water when the water was dropped on the surface of each sheet, which was made of each of the fibers. More specifically, 3 µL of pure water was dropped on the surface of the sheet under a room temperature of 23°C and a humidity of 50%, and then the contact angles were measured with a goniometer (Elma Optical Co., Ltd.: contact angle goniometer G-1) at one, three and five seconds after the dropping.

**Table 1**

| Time | Unprocessed CNF | Chemically modified CNF |
|---|---|---|
| One second later | 0 degree | 134 degrees |
| Three seconds later | - | 126 degrees |
| Five seconds later | - | 126 degrees |

### Example

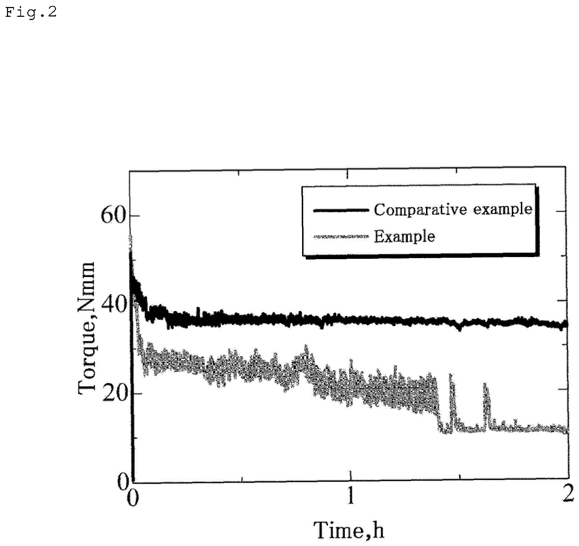

1860 g of the ether oil used as the base oil and 140 g of the above modified pulp were weighed, and then a lab mixer was used to prepare a homogeneous modified pulp suspension. The modified pulp suspension was poured into a grind mill to defiberize the pulp in the suspension, resulting in formation of the grease composition in which the hydrophobic cellulose nanofibers as the thickener were dispersed in the ether oil used as the base oil. The ether oil used as the base oil is an alkyl diphenylether oil. Table 2 lists the kinematic viscosity of the base oil. The mixing consistency (JIS K 2220: 60 times mixing consistency) was measured for this grease composition. Table 2 also lists the results. Next, this grease composition was sealed in a space inside the bearing of the 6204 rolling bearing (deeply grooved ball bearing) at a static space volume ratio of 100% by volume (1.6 g) and sealed with a shield plate to obtain a test bearing. This test bearing was subjected to the following torque measurement test for studying the time-dependent change of rotational torque. Fig. 2 lists the results. Next, it was used for the following grease leakage test.

### Comparative example

A grease composition containing an aliphatic urea compound as a thickener was obtained by using the same type of base oil as that of the example. The content of the thickener is listed in Table 2. The aliphatic urea compound is a product obtained by reacting 4,4'-diphenylmethane diisocyanate, which is a diisocyanate, with 2-fold equivalent of an octylamine, which is a monoamine, in a base oil. The mixing consistency (JIS K 2220: 60 times mixing consistency) was measured for this grease composition. Table 2 lists the results. Next, this grease composition was sealed in a space inside the bearing of the 6204 rolling bearing (deeply grooved ball bearing) at the static space volume ratio of 100% by volume (1.6 g) and sealed with the shield plate to obtain a test bearing. This test bearing was subjected to the same torque measurement test described below as in the example, for studying the time-dependent change in rotational torque. Fig. 2 illustrates the results. Next, it was used for the same grease leakage test as that of example.

### <Torque measurement test>

The torque (N mm) generated in the bearing was calculated for an inner ring rotation, when an axial load of 20 N was applied to the outer ring under a rotational speed of 3600 rpm at a room temperature (25°C) and restrained with a load cell while the test bearing was fixed.

### <Grease leakage test>

The grease residual ratio, with respect to the amount of grease before operation, was measured at 100 hours after the operation for an inner ring rotation, when an axial load of 67 N and a radical load of 67 N were applied to the outer ring under a rotational speed of 10000 rpm at a room temperature (25°C) and restrained with a load cell while the test bearing was fixed. Before the test, 1.6 g corresponding to 100% by volume of the static space volume ratio was sealed in the bearing inner space.

**Table 2**

| | Base oil | Base oil viscosity (mm²/s, 40°C) | Thickener | Ratio of thickener with respect to the whole of compositi on (% by mass) | Mixing consis tency |
|---|---|---|---|---|---|
| Example | Ether oil | 32 | Chemically modified CNF | 7.0 | 360 |
| Comparative example | Ether oil | 32 | Aliphatic urea | 14.0 | 270 |

As illustrated in Fig. 2, the torque generated at the bearing is approximately half in the example compared to that in the comparative example. The torque is low in the example. The grease leakage test revealed that 95% of the grease is left in the bearing after 100 hours of operation in the example with respect to the amount before the test, while 94% of the grease is left in the bearing after 100 hours of operation in the comparative example with respect to the amount before the test. This result demonstrates that the grease composition of the example can suppress the grease leakage to the same extent as that of the comparative example and is expected to have high durability although having a high consistency.

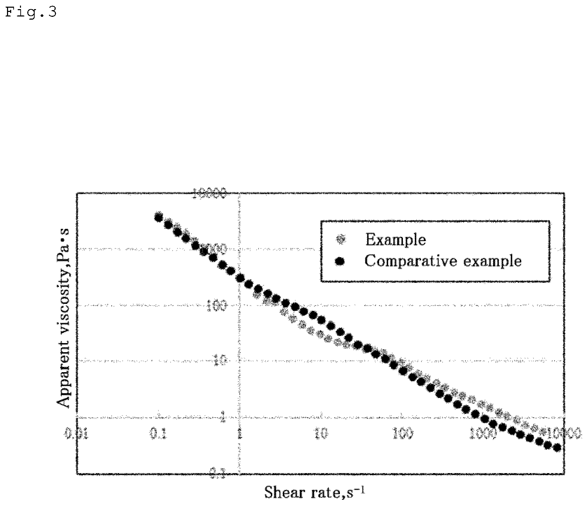

The rheological property was measured for the grease compositions of the examples and comparative examples as follows. The measurement was performed with a cone plate type cell having a 20 mm diameter tip angle of 178° in a rheometer (HAAKE RheoWin MARS1 manufactured by Thermo Fisher Scientific). The rheology measurement was performed under constant temperature and constant direction rotation at a temperature of 25°C. The shear rate was increased from 0.01 to 8000 (unit: 1/s), and the viscosity change was measured at each shear rate 45 seconds later. The results are illustrated in Fig. 3.

As illustrated in Fig. 3, the example exhibits the same extent of thickening effect although having a smaller amount of thickener than the comparative example. Therefore, it is possible to relatively increase the amount of the base oil, possibly extending the durability.

### INDUSTRIAL APPLICABILITY

The grease composition of the present invention has the high biodegradability without causing adverse effects such as rust generation, achieves lowered torque and high durability, and therefore can be utilized as compositions to be used preferably for lubrication of rolling devices such as rolling bearings, constant velocity joints, linear guide devices and ball screws.

### REFERENCE SIGNS LIST

- 1: Rolling bearing
- 2: Inner ring
- 3: Outer ring
- 4: Rolling element
- 5: Holder
- 6: Sealing member
- 7: Grease composition

## Claims

1. A grease composition comprising:
a base oil; and
a thickener, wherein
the thickener is a hydrophobic cellulose fiber and is contained in an amount of 0.1 to 15% by mass with respect to a total mass of the base oil and the thickener.

2. The grease composition according to claim 1, wherein
the hydrophobic cellulose fiber is used to prepare a sheet, and
a contact angle between the sheet and water exceeds 90 degrees when the water is dropped on a surface of the sheet.

3. The grease composition according to claim 1, wherein the hydrophobic cellulose fiber is a cellulose nanofiber with an average fiber diameter of 4 to 500 nm.

4. The grease composition according to claim 1, wherein the grease composition has a mixing consistency of 200 to 430.

5. The grease composition according to claim 1, wherein the base oil comprises at least one selected from a vegetable oil and an ester oil.

6. The grease composition according to claim 1, wherein the base oil comprises at least one selected from a paraffinic mineral oil and an ether oil.

7. A method of producing the grease composition as claimed in claim 1, the method comprising:
blending the base oil with the hydrophobic cellulose fiber to prepare a suspension, and mechanically defiberizing an aggregate of the hydrophobic cellulose fibers in the suspension and greasening.

8. A rolling device comprising two members coming into rolling contact with each other at a rolling contact part lubricated with a grease composition, wherein
the grease composition is the grease composition as claimed in claim 1.

9. The rolling device according to claim 8, that is a rolling bearing comprising:
an inner ring having an inner ring raceway surface in an outer periphery thereof;
an outer ring having an outer ring raceway surface in an inner periphery thereof; and
a plurality of rolling elements rolling between the inner ring raceway surface and the outer ring raceway surface.
